# EUROPEAN PATENT APPLICATION

(11) **EP 1 897 789 A1**
(43) Date of publication of application: **12.03.2008**
(21) Application number: 06018846.3
(22) Date of filing: 08.09.2006
(51) Int. Cl.: B62D 27/02, B62D 29/00, C23C 4/08

(54) **Structural element of a motor vehicle body made of magnesium and process for assemblying without galvanic corrosion**

(71) Applicant: Wagon Automotive GmbH, 63857 Waldaschaff (DE)
(72) Inventor: Lauer, Georg, 63856 Bessenbach (DE); Gebert, Frank, 64807 Dieburg (DE)
(74) Representative: Gesthuysen, von Rohr & Eggert

(57) **Abstract**

The invention relates to a structural element of a motor vehicle body comprising at least one first mechanical part (I) made of magnesium or a magnesium alloy - the magnesium part - and at least one second mechanical part (2) made of a metal that is not magnesium or a magnesium alloy - the metal part -, wherein both parts (1, 2) are joined to form the structural element. The surface of the magnesium part (1), at least in the joining area (3), is coated with a coating (4) of a nobler metal or an alloy of a nobler metal than magnesium and both parts (1, 2) are in direct mechanical contact in the joining area (3). Preferably, the metal of the metal part (2) is the same metal or an alloy of the same metal as the coating metal.

## Description

The invention relates to a structural element of a motor vehicle body with the features of the introductory part of claim 1, further to a mechanical part made of magnesium or a magnesium alloy with the features of the introductory part of claim 8, further to a process for manufacturing a structural element of a motor vehicle body according to claim 10, and finally to the use of a mechanical part of magnesium or a magnesium alloy in a structural element of a motor vehicle body as mentioned in claim 14.

Structural elements are mechanical parts used in the bodywork of a motor vehicle at many locations. Examples for those structural elements are straight, curved or bent elongated tubes with add-on parts for attachment, mounting or connecting purposes, elongated open or closed metal profiles, profiles used as side impact protection beams, structural frame parts of side doors, instrumental panel crossmember or any other types of assemblies for a motor vehicle body.

Weight is a permanent primary issue in the construction of a motor vehicle body. Recently magnesium and magnesium alloys came into the focus of the manufacturers of those structural elements, because manufacturing techniques have improved and the costs of large mechanical parts made of magnesium or a magnesium alloy developed into a region where they are competitive with aluminum or aluminum alloys.

Manufacturing of multi-part structural elements of a motor vehicle body needs joining of different parts in direct mechanical contact in their joining area. Direct mechanical contact of metal parts made from different metals, in particular a basic metal like magnesium, which is far from noble, leads to electrochemical processes if the joining area where the two parts are in direct mechanical contact becomes wet.

In order to prevent electrochemical processes in the joining area there is usually a third part made from plastics or the like used to separate the two parts and prevent their direct mechanical contact in the joining area. This, however, means substantial restrictions for the joining technique.

In particular, up to now it is considered impossible to join a mechanical part made of magnesium or a magnesium alloy with a second mechanical part made of a different metal like aluminum or an aluminum alloy. Not only the welding seam will show ruptures but also and even more problematic the welding seam will be the source of corrosion on the magnesium part, which may infect and even destroy the complete magnesium part.

The object of the present invention is to address above explained problems so that in the end there may be a direct mechanical contact of the magnesium part with the metal part in the joining area so that joining of those two parts will not be subject to above explained restrictions.

Above mentioned object is met by a structural element with the features of claim 1, a magnesium part for such a structural element with the features of claim 8, a process for manufacturing such a structural element with the features of claim 10, and by the use of a magnesium part according to claim 14. Further options and supplements are the subject matter of the dependent claims. Those are discussed in greater detail in the following description.

A first essential idea of the invention is to have the surface of the magnesium part, at least on its outside and at least in a joining area intended for joining of the magnesium part with a metal part, coated with a coating of a nobler metal or an alloy of a nobler metal. Since the magnesium part is covered with the nobler metallic coating there is a direct mechanical contact in the joining area only between the coating metal and the surface of the metal part. Those two materials can be adapted to each other in a way to eliminate the risk of electrochemical processes in the joining area so that corrosion will be safely prevented.

Of course, it is possible to have a metallic coating on the metal part, too. Then, all aspects mentioned here hold for the joining area between both coatings.

It may be particularly interesting to use the same metal or at least alloys of the same metal for the metal part and the coating on the magnesium part. This is particularly interesting where thermal joining, like welding, brazing or a combination thereof does the joining of the two parts.

Now, the invention will be described in more detail with reference to the drawings. Simultaneously preferred aspects and modifications along with their advantages will be explained. In the drawings
- Fig. 1: shows a schematic view of an embodiment of a structural element comprising two mechanical parts,
- Fig. 2: shows the principle of a preferred coating process for the magnesium part.

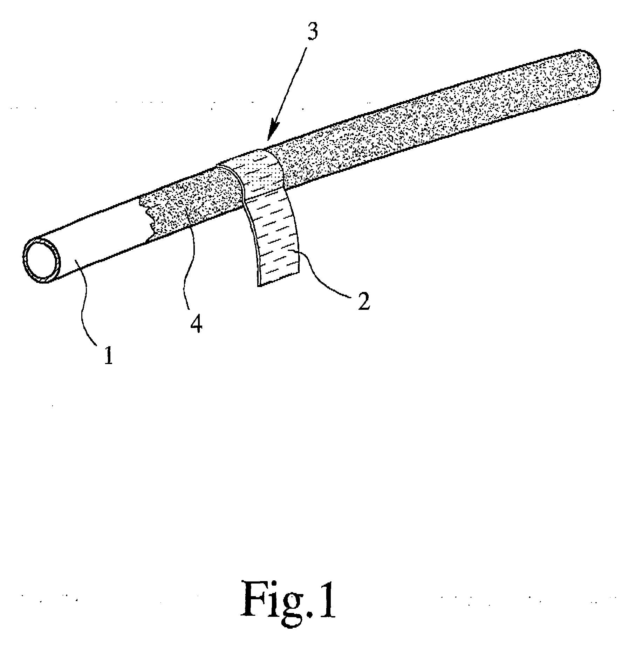

Fig. 1 shows as an example of a structural element of a motor vehicle body an instrumental panel crossmember which when mounted extends between the A-pillars of the motor vehicle body and is intended to carry the instrumental panel with all its equipment parts. Up to now such an instrumental panel crossmember was made from high strength steel. Nowadays, however, it would be interesting to manufacture at least the curved elongated tube of the instrumental panel crossmember from magnesium or a magnesium alloy. This would save a substantial amount of weight.

However, not all parts of such a structural element can be made from magnesium. Handling of magnesium in manufacturing is not a simple matter and some geometrical forms are not suitable for the use of magnesium or a magnesium alloy, or the loads experienced by those parts exclude magnesium or a magnesium alloy from the range of possible materials.

Now, Fig. 1 shows this instrumental panel crossmember as a structural element of a motor vehicle body which comprises a first mechanical part 1 made of magnesium or a magnesium alloy, here named the magnesium part, and a second mechanical part 2 made of a different metal or metal alloy, here, by way of a preferred example, of aluminum or an aluminum alloy, this part being named the metal part. Both parts 1, 2 are joined to form the structural element.

As can be seen in Fig. 1 the surface of the magnesium part 1 as a whole on its outside, however at least in a joining area 3 where the two parts 1, 2 are to be joined, is coated with a coating 4 of a nobler metal or an alloy of a nobler metal than magnesium, and both parts 1, 2 are in direct mechanical contact in the joining area 3.

In the present and preferred embodiment the coating 4 may be of aluminum or an aluminum alloy so that it is of the same basic metal, perhaps in a somewhat different composition, as the metal part 2. Obviously this is the best choice to prevent electrochemical processes in the joining area 3 and to prevent corrosion there. However, a coating 4 of a different metal, preferably of zinc, will be suitable as well. Moreover, the range of metals used for the metal part 2 can be extended if there a metal coating of appropriate choice is used as well.

Anyway, the parts 1, 2 can be freely joined in their joining area 3 by any suitable means.

In Fig. 1 the metal part 2 is shown as an add-on piece for mounting purposes, e.g. mounting of dashboard equipment parts. The magnesium part 1 here is a curved elongated tube, however a straight tube or a straight or curved elongated open or closed profile would be an equally interesting option for the form of the magnesium part 1.

There is no risk of electrochemical processes and corrosion at the interface between the metal coating 4 and the magnesium part 1, because there is no water or any other electrochemically active substance existing at that interface.

Traditional electrochemical processes in a bath can do application of the metal coating 4 onto the surface of the magnesium part 1. However, the preferred way to apply the metal coating 4 is thermal spraying.

Thermal spraying is a process in which metals are melted and sprayed on a surface to form a coating. The general term thermal spraying covers a number of different spraying processes, namely flame spraying, plasma arc spraying, twin-wire electric arc spraying, high velocity oxy/fuel spraying and detonation gun spraying (see the website www,arb.ca.gov of the Califormia Air Resources Board with the fact sheet "Thermal Spraying").

The metals that are sprayed are pure metals or alloys that are generally in the form of powders, wires, or rods. The energy that is used to melt the metal is provided by a combustion source or, in the preferred form of electric arc spraying, by an electric arc. After the metal is melted, compressed air or another gas propels the droplets to the surface being coated.

Thermal spraying reduces costs by providing a high-quality surface on parts that are formed from inexpensive metal. Thermal spraying may be a suitable replacement for traditional electroplating processes.

In the preferred embodiment of the structural element of a motor vehicle body the metal coating 4 is applied by an electric arc spray process. Arc spraying is generally the most economical thermal spray method for applying a corrosion resistant metal coating preferably from zinc, aluminum and their alloys. Energy costs are lower and production rates are higher than they are with competing methods such as wire flame spraying.

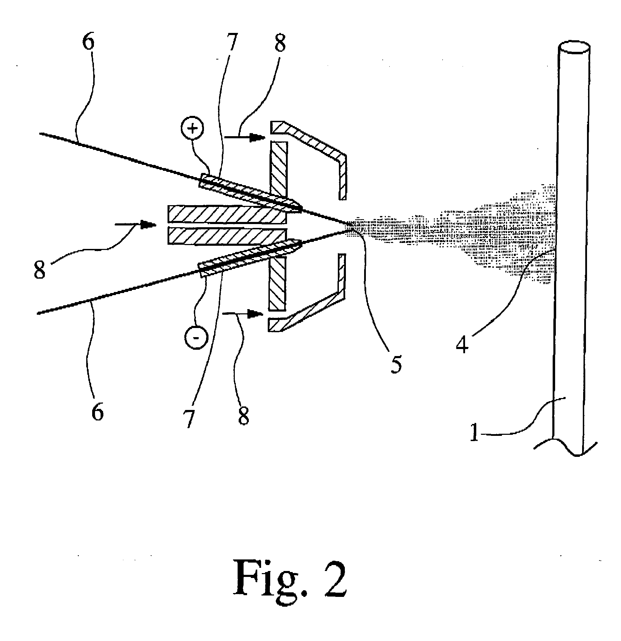

Fig. 2 shows the basic structure of an electric arc spray system. An arc 5 between two wires 6 of the coating metal is used to melt this coating metal at the tip of both wires 6. The wires 6 are fed through contact tubes 7 providing the necessary positive and negative voltage to establish the arc 5. Compressed gas, usually air, fed through gas ducts 8 is used to atomize and propel the molten metal towards the substrate, here the surface of the magnesium part 1 (for additional information see the Engineer Manual 1110-2-3401 of 29.01.1999 of the US Army Corps of Engineers, Chapter 2 "Thermal Spray Fundamentals").

As said before, in the preferred embodiment the metal coating 4 is selected from the group containing zinc, aluminum, or copper or a corresponding alloy thereof. Preferred is a metal coating 4 of zinc or aluminum.

In the preferred embodiment and the preferred application the metal part 2 is made of aluminum or an aluminum alloy, so that the complete structural element combines the magnesium part 1 with the metal part 2 of aluminum or an aluminum alloy. As the coating 4 on the magnesium part 1 is from zinc or aluminum there is a very good corrosion resistance and the surfaces of both parts 1, 2 may be in direct mechanical contact in the joining area 3.

In general it is possible that the parts 1, 2 are joined by mechanical joining means like clamps, bolts, rivets, screws or the like or are joined directly mechanically by lock-seaming, crimping or the like. In the preferred embodiment, however, it is provided that the parts 1, 2 are joined by thermal joining, preferably by welding, brazing or a combination thereof. In particular, a reduced heat transfer process like cold metal transfer may be a very good choice. Probably the future brings further developments in thermal joining techniques, which will be appropriate for the present process, too.

The coating 4 on the surface of the magnesium part 1 at least in the joining area 3 provides for the additional advantage that direct welding of both mechanical parts 1, 2 in the joining area 3 is possible. The magnesium part 1 of a magnesium alloy comprising about 6 % of additives like zinc and aluminum is covered by the coating 4 of pure zinc or aluminum. The welding may be done as metal inert gas (MIG) welding joining the aluminum of the metal part 2 with the zinc or the aluminum of the coating 4 on the magnesium part 1. This is a corrosion-free, long-lasting joining technique, which is completely novel for the field of motor vehicle bodywork.

Recent further developments in MIG welding include welding with reduced heat transfer (WO-A-2005/042199, WO-A-2005/056228). This new type of MIG welding with about a third lower heat input can be used with relatively thin metal sheets with all economic and practical advantages of classic MIG welding (cold metal transfer welding).

The invention is not only directed to the structural element of a motor vehicle body as such, but also to the critical mechanical part 1 thereof, the magnesium part as such, where it is intended, shaped and designed to be used in a structural element of a motor vehicle body. This is covered by claims 11 and 12, which refer back to the claims for the structural element as a whole.

Further, the invention covers a process that comprises the steps of providing at least one first mechanical part made of magnesium or a magnesium alloy - the magnesium part -, coating the surface of the magnesium part at least in a limited area with a coating of a nobler metal or an alloy of a nobler metal than magnesium, providing at least one second mechanical part made of a metal that is not magnesium or a magnesium alloy - the metal part - and joining both parts in a way that they are in direct mechanical contact in the joining area to form the structural element. As said above, there might be an additional process step related to the second part, namely coating its surface at least in a limited area with a metal coating adapted to the metal coating on the magnesium part. All further preferred process steps that are available are implicitly mentioned in the above given explanation of the preferred embodiment of the product.

Finally, the invention covers the idea to use a mechanical part made of magnesium or a magnesium alloy which is coated, at least in a limited joining area, preferably on the whole surface thereof, with a coating of a nobler metal or an alloy of a nobler metal as one part of a structural element of a motor vehicle body, wherein the structural element of the motor vehicle body has at least one second mechanical part made of a metal that is not magnesium or a magnesium alloy.

## Claims

1. Structural element of a motor vehicle body comprising
at least one first mechanical part (1) made of magnesium or a magnesium alloy - the magnesium part - and
at least one second mechanical part (2) made of a metal that is not magnesium or a magnesium alloy - the metal part -,
wherein both parts (1, 2) are joined to form the structural element,
**characterized in that**
the surface of the magnesium part (1), at least in the joining area (3), is coated with a coating (4) of a nobler metal or an alloy of a nobler metal than magnesium, and both parts (1, 2) are in direct mechanical contact in the joining area (3),
wherein, preferably, the metal of the metal part (2) is the same metal or an alloy of the same metal as the coating metal.

2. Structural element according to claim 1, **characterized in that**
the coating (4) is applied on the whole outer surface of the magnesium part (1).

3. Structural element of claim 1 or 2, **characterized in that**
the coating (4) is applied onto the surface of the magnesium part (1) by thermal spraying, wherein, preferably, the coating (4) is applied onto the surface of the magnesium part (1) by an electric arc spray process.

4. Structural element according to any one of the preceding claims,
**characterized in that**
the coating (4) is from zinc, aluminum or the like or from a corresponding alloy.

5. Structural element according to any one of the preceding claims,
**characterized in that**
the metal part (2) is made of aluminum or an aluminum alloy or
the metal part (2) is coated, at least in the joining area (3), with a metal coating adapted to the metal coating (4) on the magnesium part (1).

6. Structural element according to any one of the preceding claims,
**characterized in that**
the parts (1,2) are joined by mechanical joining means like clamps, bolts, rivets, screws or the like or are joined directly mechanically by lock-seaming, crimping or the like, or
the parts (1, 2) are joined by a thermal joining process, like welding, brazing or a combination thereof, in particular by a reduced heat transfer process like cold metal transfer or the like.

7. Structural element according to any one of the preceding claims,
**characterized in that**
the magnesium part (1) is a straight, curved or bent elongated tube or a straight, curved or bent elongated open or closed profile, and/or
the metal part (2) is an add-on piece for attachment, mounting or connecting purposes.

8. Mechanical part (1) made of magnesium or a magnesium alloy - the magnesium part - for use as a part of a structural element of a motor vehicle body,
**characterized in that**
its surface, at least in an area provided for joining with a second mechanical part (2) of the structural element, is coated with a coating (4) of a nobler metal or an alloy of a nobler metal.

9. Mechanical part (1) according to claim 8, **characterized by**
the features of the characterizing part of one or more of the claims 2, 3, 4, 7.

10. Process for manufacturing a structural element of a motor vehicle body, comprising the following process steps:
Providing at least one first mechanical part made of magnesium or a magnesium alloy - the magnesium part -,
coating the surface of the magnesium part at least in a limited area with a coating of a nobler metal or an alloy of a nobler metal than magnesium,
providing at least one second mechanical part made of a metal that is not magnesium or a magnesium alloy - the metal part -,
optionally, coating the surface of the metal part at least in the limited area with a metal coating adapted to the metal coating on the magnesium part,
joining both parts in a way that they are in direct mechanical contact in the joining area to form the structural element.

11. Process according to claim 10, **characterized in that**
in the coating step the coating is applied on the whole outer surface of the magnesium part, and/or
in the coating step the coating is applied onto the surface of the magnesium part by thermal spraying, preferably by way of an electric arc spray process.

12. Process according to claim 10 or 11, **characterized in that**
the metal of the coating is selected from zinc, aluminum, or the like or a corresponding alloy, and/or
the metal of the metal part or the coating of the metal part is selected from the group containing aluminum and aluminum alloys.

13. Process according to any one of the claims 10 to 12, **characterized in that**
joining of the parts is done mechanically by use of additional joining means like clamps, bolts, rivets, screws or the like or directly mechanically by lock-seaming, crimping or the like, or
joining of the parts is done by a thermal joining process, like welding, brazing or a combination thereof, in particular by a reduced heat transfer process like cold metal transfer or the like.

14. Use of a mechanical part made of magnesium or a magnesium alloy which is coated, at least in a limited joining area, preferably on the whole surface thereof, with a coating of a nobler metal or an alloy of a nobler metal as one part of a structural element of a motor vehicle body, wherein the structural element of the motor vehicle body has at least one second mechanical part made of a metal that is not magnesium or a magnesium alloy.

## Amended claims

### Amended claims in accordance with Rule 137(2) EPC.

**1.** Structural element of a motor vehicle body comprising
at least one first mechanical part (1) made of magnesium or a magnesium alloy - the magnesium part - and
at least one second mechanical part (2) made of a metal that is not magnesium or a magnesium alloy - the metal part -,
wherein both parts (1,2) are joined to form the structural element,
wherein the surface of the magnesium part (1), at least in the joining area (3), is coated with a coating (4) of zinc or aluminum or a corresponding alloy and both parts (1, 2) are in direct mechanical contact in the joining area (3),
the coating (4) is applied onto the surface of the magnesium part (1) by thermal spraying, in particular in the form of an electric arc spray process,
**characterized in that**
the parts (1, 2) are joined by a cold metal transfer process.

**2.** Structural element according to claim 1, **characterized in that**
the coating (4) is applied on the whole outer surface of the magnesium part (1).

**3.** Structural element according to claim 1 or 2, **characterized in that**
the metal part (2) is made of aluminum or an aluminum alloy.

**4.** Structural element according to any one of the preceding claims,
**characterized in that**
the magnesium part (1) is a straight, curved or bent elongated tube or a straight, curved or bent elongated open or closed profile, and/or
the metal part (2) is an add-on piece for attachment, mounting or connecting purposes.

**5.** Process for manufacturing a structural element of a motor vehicle body, comprising the following process steps:
Providing at least one first mechanical part made of magnesium or a magnesium alloy - the magnesium part -,
providing at least one second mechanical part made of a metal that is not magnesium or a magnesium alloy - the metal part -,
coating the surface of the magnesium part at least in a limited area intended for later joining with the metal part with a coating of zinc, aluminum or a corresponding alloy by thermal spraying, preferably by way of an electric arc spray process,
joining both parts in a way that they are in direct mechanical contact in the joining area to form the structural element
**characterized in that**
the joining of both parts is done by a cold metal transfer process.

**6.** Process according to claim 5, **characterized in that**
in the coating step the coating is applied on the whole outer surface of the magnesium part.

**7.** Process according to claim 5 or 6, **characterized in that**
the metal of the metal part or the coating of the metal part is selected from the group containing aluminum and aluminum alloys.
